# FASCICULE DE BREVET EUROPEEN

(11) **EP 4 310 380 B1**
(45) Date de publication et mention de la délivrance du brevet: **09.09.2026**
(21) Numéro de dépôt: 23186027.1
(22) Date de dépôt: 18.07.2023
(51) Int. Cl.: F16L 55/115, B65D 59/02, B65D 59/06, F16L 59/16, G01M 3/00, G01M 3/18, F16L 59/14

(54) **DISPOSITIF DE FERMETURE D'UN TRONÇON DE CONDUITE DOUBLE ENVELOPPE COMPRENANT UN DÉTECTEUR DE L EAU**
VORRICHTUNG ZUM VERSCHLIESSEN EINES MANTEL-DOPPELLEITUNGSABSCHNITTS MIT EINEM WASSERDETEKTOR
DEVICE FOR CLOSING A DOUBLE-WALLED PIPE SECTION COMPRISING A WATER DETECTOR

(30) Priorité: 18.07.2022 FR 2207300
(43) Date de publication de la demande: 24.01.2024
(73) Titulaire: ITP SA, 78430 Louveciennes (FR)
(72) Inventeur: GEERTSEN, Christian, 78430 Louveciennes (FR)
(74) Mandataire: Cabinet Célanie

(56) Documents cités:
- DE-A1- 102018 212 993
- US-A- 4 576 661
- US-A- 5 974 653

## Description

### DOMAINE DE L'INVENTION

Le secteur technique de la présente invention concerne les conduites double enveloppe ou pipelines dont les extrémités sont ouvertes et dont on souhaite les protéger contre toute intrusion de produits solides ou liquides. Ces conduites sont constituées de sections transportées sur le lieu d'implantation et y sont assemblées par soudure, éventuellement sur un lieu intermédiaire où ils sont assemblés dans des structures de taille intermédiaire, par exemple des modules d'unités de traitement ou de transport de gaz et de liquides.

### ETAT DE LA TECHNIQUE

Dans le secteur pétrolier, on utilise depuis plusieurs décennies des conduites à double enveloppe calorifugées pour assurer leur isolation thermique formées par l'assemblage successif par soudure de sections de tubes à double enveloppe de longueur comprise entre 6 mètres et 50 mètres. Il s'agit de réduire la déperdition thermique entre un fluide chaud ou froid circulant dans ladite conduite et l'environnement extérieur.

Les applications sont souvent pétrolières mais peuvent concerner aussi d'autres domaines comme par exemple le transport de l'air très chaud dans le domaine de l'énergie solaire à concentration, les huiles végétales ou les fluides cryogéniques comme le GNL ou l'hydrogène liquéfié.

Les conduites se présentent sous la forme de conduites à double enveloppe, où l'enveloppe extérieure participe à la réalisation d'un espace annulaire scellé, ce qui permet de réduire la pression dans l'annulaire afin d'optimiser la performance thermique de l'isolation et de protéger mécaniquement le système d'isolation thermique de l'environnement extérieur (humidité, pression, agressions mécaniques). Les conduites sont préfabriquées sous la forme de tronçons que l'on réunit ensemble pour constituer ladite conduite. Les extrémités de ces tronçons reçoivent en général un calfeutrage qui n'offre qu'une protection limitée lors des manipulations en fabrication et lors du transport et du stockage de ceux-ci avant l'assemblage de ces tronçons pour constituer la conduite.

L'intrusion d'eau sous forme de liquide est un problème particulièrement grave, car l'eau liquide imbibe l'isolant en dégradant ses performances thermiques. Ces performances ne peuvent pas être récupérées lors d'un séchage ultérieur, car les forces de capillarité de l'eau vont localement compacter l'isolant et lui faire perdre son caractère microporeux. Une distinction est faite avec l'eau sous forme de gaz, cette dernière peut s'adsorber sur l'isolant mais ne conduit pas à une dégradation des performances, car l'adsorption est un phénomène réversible à la différence de l'absorption.

Il convient donc non seulement d'éviter l'introduction d'eau au niveau du matériau isolant mais encore d'éviter toute introduction de produits liquides ou solides et pour plus de sûreté prévoir un dispositif de détection de la présence d'eau.

Dans la publication référencée http://www.gulfcooltherm.com/leak-detection-system.html on a proposé un dispositif de détection de la présence d'eau dans une conduite double enveloppe. A cette fin, des fils conducteurs sont insérés dans le matériau isolant et ces fils sont connectés à un boîtier de détection.

Dans la publication référencée https://wideco.se/en/monitoring-solutions/monitoring-products/ on propose d'installer des fils conducteurs entre le matériau isolant et le tube externe de la conduite pour détecter la présence d'eau.

Le document US 4,576,661 divulgue une structure permettant de réaliser un agencement de tuyauterie isolée et étanche par l'introduction d'un matériau d'étanchéité fondu entre un tuyau interne de circulation du fluide et une enveloppe extérieure, l'espace ainsi formé comprenant des fils de surveillance de l'humidité.

Les solutions proposées visent uniquement à détecter la présence d'eau dans la conduite assemblée, mais ne vise aucune surveillance des extrémités des tronçons préfabriqués avant la réalisation effective de la conduite.

### RESUME DE L'INVENTION

C'est l'objectif de l'invention que de proposer un dispositif d'obturation d'un tronçon de conduite permettant l'isolation de ce tronçon aux différentes matières susceptible de le polluer par exemple avec de l'eau néfaste au maintien de l'isolation thermique.

L'invention a donc pour objet un dispositif d'obturation d'un tronçon de conduite double enveloppe d'un tube interne et d'un tube externe entre lesquels un matériau isolant est intercalé, comprenant un détecteur de l'eau. L'invention est définie par la revendication indépendante. Le dispositif d'obturation comprend :
- un premier bouchon de fermeture du tube interne,
- un prolongement tubulaire destiné à être soudé à l'extrémité du tube externe, l'extrémité libre dudit prolongement s'étendant au-delà du premier bouchon et étant fermé par un second bouchon,
- un moyen de fixation de la position des tubes interne et externe solidaire du prolongement.

Le moyen de fixation est constitué d'un bourrelet en appui contre le premier bouchon et maintenu par une plaque solidaire du prolongement.

Selon une autre caractéristique de l'invention, le dispositif comprend un anneau réalisé en un matériau souple solidaire du prolongement, un détecteur de présence d'eau implanté dans ledit anneau et un boîtier d'enregistrement du courant électrique alimentant le détecteur.

Avantageusement, le détecteur est constitué de deux fils conducteurs torsadés isolés électriquement l'un de l'autre par une matière poreuse.

Selon encore une autre caractéristique de l'invention, le dispositif comporte un détecteur de température intégré au boîtier d'enregistrement et associé à une mémoire de stockage.

Selon encore une autre caractéristique de l'invention, le boîtier d'enregistrement est apte à scruter suivant une fréquence prédéterminée l'état de conduction du détecteur et à stocker en mémoire les résultats des mesures.

Selon encore une autre caractéristique de l'invention, les premier et second bouchons sont réalisés en un matériau polymère ou équivalent transparent aux ondes électromagnétiques.

Selon encore une autre caractéristique de l'invention, le détecteur peut être interrogé à distance afin de recueillir les données récoltées.

Avantageusement, l'analyse conjointe des données de température et de présence d'eau au cours du temps permet d'éliminer les faux positifs.

Selon un tout premier avantage de l'invention, on réalise une isolation parfaite de l'extrémité du tronçon de conduite à l'aide d'un dispositif simple à mettre en œuvre.

Selon un autre avantage de l'invention, le l'analyse conjointe des données de température et de conduction permet de distinguer une présence d'humidité de la présence effective d'eau au niveau de l'extrémité du tronçon.

Selon encore un autre avantage de l'invention, la récupération des données stockées dans le boîtier de stockage peut être effectuée à tout moment.

### BREVE DESCRIPTION DES DESSINS

D'autres caractéristiques, avantages et détails de l'invention seront mieux compris à la lecture du complément de description qui va suivre en rapport avec les dessins dans lesquels :
La figure 1 représente une coupe de l'extrémité d'un tronçon de conduite double enveloppe obturée par le dispositif de fermeture selon l'invention,
La figure 2 est un graphique des mesures effectuées montrant la présence d'eau, et
La figure 3 est un graphique montrant l'absence d'eau.

### DESCRIPTION DETAILLEE DE MODES DE REALISATION DE L'INVENTION

L'invention va maintenant être exposée avec d'avantage de détails. Comme indiqué précédemment, une conduite double enveloppe est constituée de plusieurs tronçons raccordés entre eux de façon à obtenir des longueurs de l'ordre de plusieurs centaines de mètres ou de plusieurs kilomètres. Il s'agit alors de protéger les extrémités libres des tronçons, soit pendant leur transports, soit pendant les périodes de construction, avant fermeture définitive de l'annulaire.

Dans le cas concerné, on s'intéresse aux conduites dites « à annulaire continu » où l'espace annulaire s'étend sur des centaines de mètres voire des kilomètres, permettant ainsi de réaliser le vide à partir d'un point de pompage unique.

La construction de ces conduites est traditionnellement réalisée à partir de tubes d'une longueur de 12 m environ. Ceux-ci sont rassemblés sur un premier site industriel où l'on réalisera des assemblages isolés comprenant un tube interne, l'isolant thermique et un tube externe avant de les expédier vers le lieu d'utilisation finale ou un lieu d'assemblage intermédiaire où l'on fabriquera des assemblages de taille intermédiaire ; il peut par exemple s'agir de modules de longueur 30-50m intégrant des conduites et toutes sortes d'autres équipements. Afin de préserver l'isolation, il est impératif d'installer des dispositifs d'obturation pour protéger les extrémités de ces tronçons ou modules pour empêcher l'intrusion d'eau et on prévoira des procédures spécifiques de préservation.

Malgré tout, les phases de transfert et de construction ultérieures sont des périodes de vulnérabilité des assemblages car les systèmes de protection ont leurs propres modes de défaillance et chaque opération de construction oblige à les enlever et les réinstaller après travaux.

De plus, d'un point de vue contractuel, à chacune de ces étapes il peut y avoir un transfert de responsabilité et/ou de propriété des éléments de conduite entre les divers acteurs et intervenants lors de la fabrication. Il est alors particulièrement avantageux de pouvoir démontrer l'intégrité du système transféré à chaque étape.

Il convient donc à la fois de protéger les extrémités de chaque tronçon à l'aide d'un dispositif d'obturation et de contrôler l'étanchéité de ce dispositif pour détecter la présence d'eau.

Selon l'invention, le dispositif d'obturation **1** d'un tronçon **2** de conduite double enveloppe est destiné à fermer l'extrémité de ce tronçon comprenant un tube interne **3** et un tube externe **4** entre lesquels un matériau isolant **5** est intercalé.

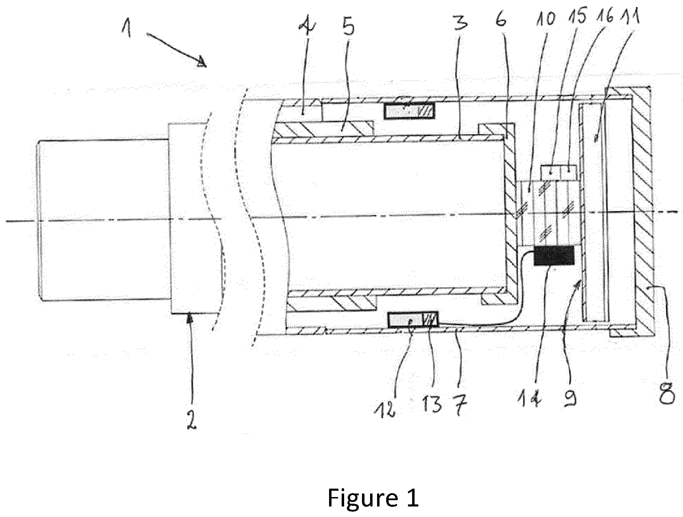

Le dispositif comprend un premier bouchon **6** de fermeture du tube interne **3,** un prolongement tubulaire **7** soudé à l'extrémité du tube externe **4.** Sur la figure 1, on voit que l'extrémité libre dudit prolongement tubulaire **7** s'étend au-delà du premier bouchon **6.** L'étanchéité de la soudure par points du prolongement **7** sur le tube externe peut être renforcée par des bandes adhésives circonférentielles.

Sur la figure 1, on voit encore que le prolongement **7** est soudé bout à bout avec le tube externe **4.** Il va de soi que ce prolongement peut être fixé de manière quelconque au tube externe par exemple en recouvrement intérieur ou extérieur.

L'extrémité libre du prolongement 7 est fermée par un second bouchon **8.**

Les premier **6** et second bouchons **8** sont réalisés en un matériau polymère ou équivalent transparent aux ondes électromagnétiques.

Le dispositif est complété par un moyen de fixation **9** de la position des tubes interne **3** et externe **4** solidaire du prolongement **7.**

Le moyen de fixation **9** est constitué d'un bourrelet **10** en appui contre le premier bouchon **6** et maintenu par une poutre métallique **11** solidaire du prolongement **7.** Le rôle de ce moyen de fixation est d'interdire tout glissement relatif entre les tubes interne et externe puisque le tube externe peut coulisser le long de l'isolant au cours des phases de fabrication de la conduite.

La détection de présence d'eau est réalisée à l'aide d'un anneau **12** réalisé en un matériau souple solidaire du prolongement **7** autour duquel un détecteur **13** de présence d'eau est implanté. L'anneau souple permet le bon plaquage du détecteur sur l'intérieur du tube externe, sur tout son pourtour. Ce détecteur est connecté à un boîtier d'enregistrement **14** du courant électrique alimentant ledit détecteur **13.**

Le détecteur **13** peut être constitué de deux fils conducteurs torsadés isolés électriquement l'un de l'autre par une matière poreuse. Ainsi, lorsque cette matière poreuse est imbibée d'eau le contact électrique entre les deux fils est établi en réalisant un court-circuit entre eux. Cette information est enregistrée dans le boîtier **14.**

Ce type de détecteur est bien connu dans la littérature et il n'est pas nécessaire de le décrire en détail. L'homme du métier pourra sans difficulté intégrer ce détecteur dans l'anneau du dispositif selon l'invention et le raccorder au boîtier d'enregistrement.

Le dispositif est complété par un détecteur de température **15** intégré au boîtier d'enregistrement **14** et associé à une mémoire de stockage **16.** Ce boîtier est apte à scruter suivant une fréquence prédéterminée l'état de conduction des détecteurs **13** et **15** et à stocker en mémoire les résultats des mesures. Les résultats ainsi collectés de température et d'humidité sont récupérés par une unité d'interrogation en relation avec une donnée de localisation géographique par ondes électromagnétiques. La distance d'échange entre le boîtier **14** et l'unité d'interrogation est variable en fonction des obstacles et du taux de transfert des données et peut s'effectuer sur une portée de l'ordre jusqu'à 500 m. Les données recueillies sont ensuite transférées dans un système d'analyse et de traitement, toujours par ondes électromagnétiques, utilisant pas exemple le réseau téléphonique. Ces données peuvent être cryptées selon les standards en vigueur.

Il va sans dire que le système d'analyse différentie les différents détecteurs, permet la création de traces temporelles des mesures, la visualisation du lieu de relevé des mesures, la définition des seuils d'alarme, la définition des droits d'accès, de modification par l'utilisateur, le déchargement des données pour une utilisation plus affinée ou la création de rapports.

L'exploitation des données tient compte du fait que les fils torsadés créent un détecteur d'eau liquide extrêmement sensible, par exemple dès l'apparition de quelques gouttes d'eau, qui établit la conduction électrique et génère un signal de présence d'eau. La réponse est donc binaire du type tout ou rien. Ce fonctionnement engendre un risque de résultats faux positifs dus à la présence de condensations minimes, sans gravité de quelques gouttes d'eau qui vont s'évaporer par la suite sans endommager l'isolant thermique.

L'exploitation conjointe des données de température et de mesure de présence d'eau permet de trier les évènements de condensation qui vont s'évaporer au bout de quelques heures et des vraies intrusions d'eau qui ne varient pas en fonction de la température extérieure. En effet, les condensations minimes doivent nécessairement apparaître conjointement avec une chute de température assez rapide et disparaître ensuite quand la température remonte ou se stabilise.

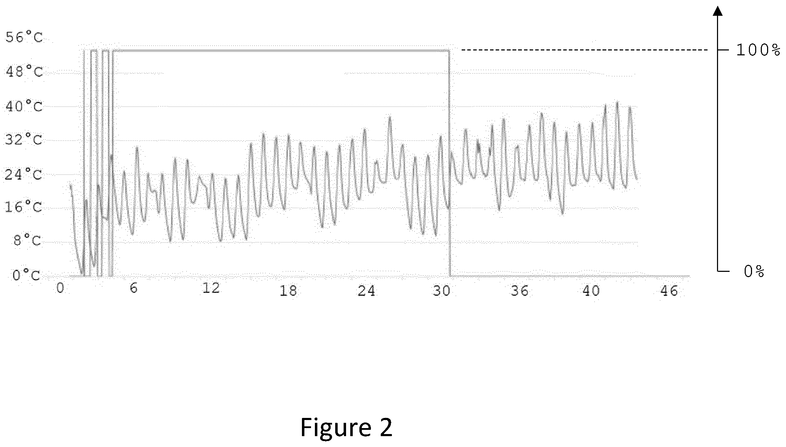

La figure 2 illustre la trace temporelle des mesures de température et d'humidité. L'échelle de gauche représente la température, et à droite une échelle représentant l'humidité de 0 à 100%, l'ensemble sur une période de 48 jours. La trace de température suit une période de 24h. On constate au début de la trace d'humidité des évènements courts (quelques heures) apparaissant sur le front montant de température, et finalement, au quatrième évènement, la présence d'eau devient permanente. L'ouverture subséquente a permis d'identifier la présence d'une flaque d'eau.

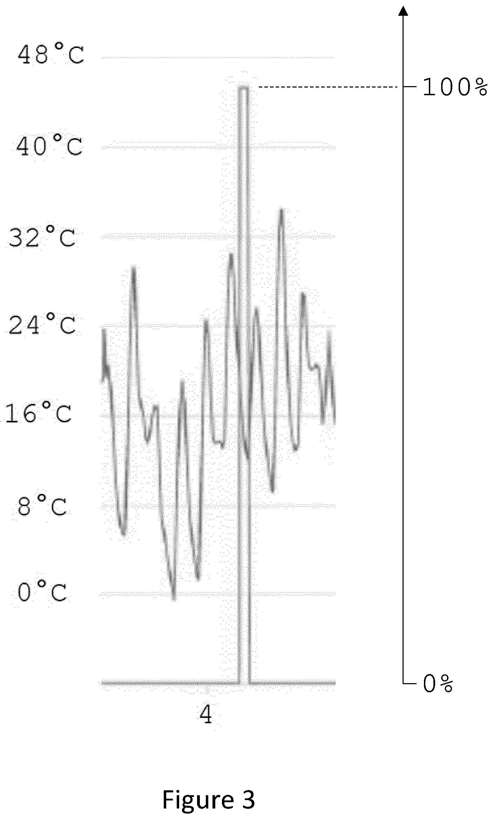

La figure 3 illustre l'apparition de l'eau sur un front descendant puis elle a disparu. Cet évènement peut alors être classifié comme non-dangereux.

L'invention porte sur un ensemble comportant des éléments physiques : système de fermeture du pipeline pour le transport, anneau de présentation du capteur sur la périphérie intérieure du tuyau, dispositif de mesure d'eau et de température, système de transmission et de présentation des données, principe de traitement des données pour diminuer le taux de faux-positifs.

## Revendications

1. Dispositif d'obturation **(1)** destiné à fermer l'extrémité d'un tronçon **(2)** de conduite double enveloppe comprenant un tube interne **(3)** et d'un tube externe **(4)** entre lesquels un matériau isolant est intercalé, ledit dispositif comprenant un détecteur **(13)** de l'eau, **caractérisé en ce qu'**il comprend :
- un premier bouchon **(6)** de fermeture pour la fermeture du tube interne **(3),**
- un prolongement tubulaire **(7)** avec deux extrémités et destiné à être soudé à l'extrémité du tube externe **(4)** à l'une de ses extrémités, l'autre extrémité, dite libre, dudit prolongement tubulaire (7) configurée pour s'étendre au-delà du premier bouchon **(6)** et étant fermée par un second bouchon **(8),**
- un moyen de fixation **(9)** de la position des tubes interne **(3)** et externe **(4),** quand le tube externe **(4)** est soudé au prolongement **(7),** ledit moyen de fixation **(9)** étant solidaire du prolongement **(7)** et ledit moyen de fixation (9) étant constitué d'un bourrelet (10) en appui contre le premier bouchon (6) et maintenu par une plaque solidaire du prolongement (7).

2. Dispositif d'obturation **(1)** destiné à fermer l'extrémité d'un tronçon **(2)** de conduite double enveloppe selon la revendication 1, **caractérisé en ce qu'**il comprend un anneau **(12)** réalisé en un matériau souple solidaire du prolongement **(7),** le détecteur **(13)** de présence d'eau implanté autour de ledit anneau **(12)** et un boîtier d'enregistrement **(14)** du courant électrique alimentant le détecteur **(13).**

3. Dispositif d'obturation **(1)** destiné à fermer l'extrémité d'un tronçon **(2)** de conduite double enveloppe selon la revendication 2, **caractérisé en ce que** le détecteur **(13)** est constitué de deux fils conducteurs torsadés isolés électriquement l'un de l'autre par une matière poreuse.

4. Dispositif d'obturation **(1)** destiné à fermer l'extrémité d'un tronçon **(2)** de conduite double enveloppe selon la revendication 2 ou 3 **caractérisé en ce qu'**il comporte un détecteur de température **(15)** intégré au boîtier d'enregistrement **(14)** et associé à une mémoire de stockage **(16)**.

5. Dispositif d'obturation **(1)** destiné à fermer l'extrémité d'un tronçon **(2)** de conduite double enveloppe selon l'une quelconque des revendication 2 à 4, **caractérisé en ce que** le boîtier d'enregistrement **(14)** est apte à scruter suivant une fréquence prédéterminée l'état de conduction du détecteur **(13)** et à stocker en mémoire les résultats des mesures.

6. Dispositif d'obturation **(1)** destiné à fermer l'extrémité d'un tronçon **(2)** de conduite double enveloppe selon l'une quelconque des revendications précédentes, **caractérisé en ce que** les premier et second bouchons **(6, 8)** sont réalisés en un matériau polymère ou équivalent transparent aux ondes électromagnétiques.

7. Dispositif d'obturation **(1)** destiné à fermer l'extrémité d'un tronçon **(2)** de conduite double enveloppe selon l'une quelconque des revendications précédentes, **caractérisé en ce que** le détecteur peut être interrogé à distance afin de recueillir les données récoltées.

8. Dispositif d'obturation **(1)** destiné à fermer l'extrémité d'un tronçon **(2)** de conduite double enveloppe selon l'une quelconque des revendications 4 à 7, , **caractérisé en ce que** l'analyse conjointe des données de température et de présence d'eau au cours du temps permet d'éliminer les faux positifs.

## Patentansprüche

1. Verschlussvorrichtung (1), die zum Verschließen des Endes eines Abschnitts (2) einer doppelwandigen Leitung bestimmt ist, die ein Innenrohr (3) und ein Außenrohr (4) umfasst, zwischen denen ein Isoliermaterial angeordnet ist, wobei die Vorrichtung einen Wasserdetektor (13) umfasst, **dadurch gekennzeichnet, dass** sie umfasst:
- einen ersten Verschlussstopfen (6) zum Verschließen des Innenrohrs (3),
- eine rohrförmige Verlängerung (7) mit zwei Enden, die dazu bestimmt ist, an dem Ende des Außenrohrs (4) an einem seiner Enden angeschweißt zu sein, wobei das andere freie Ende der rohrförmigen Verlängerung (7) so konfiguriert ist, dass es sich über den ersten Stopfen (6) hinaus erstreckt und durch einen zweiten Stopfen (8) verschlossen wird,
- ein Mittel (9) zum Fixieren der Position des Innenrohrs (3) und des Außenrohrs (4), wenn das Außenrohr (4) an der Verlängerung (7) angeschweißt ist, wobei das Befestigungsmittel (9) mit der Verlängerung (7) fest verbunden ist und das Befestigungsmittel (9) aus einer Wulst (10) besteht, die an dem ersten Stopfen (6) anliegt und von einer mit der Verlängerung (7) fest verbundenen Platte gehalten wird.

2. Verschlussvorrichtung (1), die zum Verschließen des Endes eines Abschnitts (2) einer doppelwandigen Leitung bestimmt ist, nach Anspruch 1, **dadurch gekennzeichnet, dass** sie einen aus einem flexiblen Material hergestellten und mit der Verlängerung (7) fest verbundenen Ring (12), den um den Ring (12) herum angeordneten Wasserpräsenzdetektor (13) und eine Aufzeichnungseinheit (14) für den elektrischen Strom, der den Detektor (13) versorgt, umfasst.

3. Verschlussvorrichtung (1), die zum Verschließen des Endes eines Abschnitts (2) einer doppelwandigen Leitung bestimmt ist, nach Anspruch 2, **dadurch gekennzeichnet, dass** der Detektor (13) aus zwei verdrillten Leiterdrähten besteht, die durch ein poröses Material voneinander elektrisch isoliert sind.

4. Verschlussvorrichtung (1), die zum Verschließen des Endes eines Abschnitts (2) einer doppelwandigen Leitung bestimmt ist, nach Anspruch 2 oder 3, **dadurch gekennzeichnet, dass** sie einen in die Aufzeichnungseinheit (14) integrierten und mit einem Speicher (16) verbundenen Temperaturfühler (15) umfasst.

5. Verschlussvorrichtung (1), die zum Verschließen des Endes eines Abschnitts (2) einer doppelwandigen Leitung bestimmt ist, nach einem der Ansprüche 2 bis 4, **dadurch gekennzeichnet, dass** die Aufzeichnungseinheit (14) imstande ist, den Leitfähigkeitszustand des Detektors (13) mit einer vorbestimmten Frequenz abzutasten und die Messergebnisse in einem Speicher zu speichern.

6. Verschlussvorrichtung (1), die zum Verschließen des Endes eines Abschnitts (2) einer doppelwandigen Leitung bestimmt ist, nach einem der vorangehenden Ansprüche, **dadurch gekennzeichnet, dass** der erste und der zweite Stopfen (6, 8) aus einem polymeren oder gleichwertigen Material hergestellt sind, das für elektromagnetische Wellen transparent ist.

7. Verschlussvorrichtung (1), die zum Verschließen des Endes eines Abschnitts (2) einer doppelwandigen Leitung bestimmt ist, nach einem der vorangehenden Ansprüche, **dadurch gekennzeichnet, dass** der Detektor aus der Ferne abgefragt werden kann, um die gesammelten Daten abzurufen.

8. Verschlussvorrichtung (1), die zum Verschließen des Endes eines Abschnitts (2) einer doppelwandigen Leitung bestimmt ist, nach einem der Ansprüche 4 bis 7, **dadurch gekennzeichnet, dass** die gemeinsame Analyse der Temperaturdaten und Wasserpräsenzdaten im Zeitverlauf die Eliminierung falschpositiver Ergebnisse ermöglicht.

## Claims

1. A closure device (1) for closing the end of a section (2) of a double-walled pipe comprising an inner tube (3) and an outer tube (4), between which an insulating material is interposed, said device comprising a water detector (13), **characterised in that** it comprises:
- a first closure cap (6) for closing the inner tube (3),
- a tubular extension (7) having two ends and intended to be welded at one of the ends thereof to the end of the outer tube (4), the other end, referred to as the free end, of said tubular extension (7) being configured to extend beyond the first cap (6) and being closed by a second cap (8),
- a means (9) for securing the position of the inner (3) and outer (4) tubes when the outer tube (4) is welded to the extension (7), said securing means (9) being integral with the extension (7) and said securing means (9) being constituted by a bead (10) bearing against the first cap (6) and held in place by a plate that is integral with the extension (7).

2. The closure device (1) for closing the end of a section (2) of a double-walled pipe according to claim 1, **characterised in that** it comprises a ring (12) made of a flexible material and integral with the extension (7), a water presence detector (13) arranged around said ring (12), and a unit (14) for recording the electrical current supplying the detector (13).

3. The closure device (1) for closing the end of a section (2) of a double-walled pipe according to claim 2, **characterised in that** the detector (13) consists of two twisted conductive wires electrically insulated from one another by a porous material.

4. The closure device (1) for closing the end of a section (2) of a double-walled pipe according to claim 2 or 3, **characterised in that** it comprises a temperature sensor (15) incorporated in the recording unit (14) and associated with a storage memory (16).

5. The closure device (1) for closing the end of a section (2) of a double-walled pipe according to any one of claims 2 to 4, **characterised in that** the recording unit (14) is capable of monitoring the conduction state of the detector (13) at a predetermined frequency and of storing the measurement results in memory.

6. The closure device (1) for closing the end of a section (2) of a double-walled pipe according to any one of the preceding claims, **characterised in that** the first and second caps (6, 8) are made of a polymer material or an equivalent material that is transparent to electromagnetic waves.

7. The closure device (1) for closing the end of a section (2) of a double-walled pipe according to any one of the preceding claims, **characterised in that** the detector can be interrogated remotely in order to retrieve the collected data.

8. The closure device (1) for closing the end of a section (2) of a double-walled pipe according to any one of claims 4 to 7, **characterised in that** the joint analysis of temperature data and water-presence data over time enables false positives to be eliminated.
